# EUROPÄISCHE PATENTANMELDUNG

(11) **EP 4 488 087 A1**
(43) Veröffentlichungstag der Anmeldung: **08.01.2025**
(21) Anmeldenummer: 23183274.2
(22) Anmeldetag: 04.07.2023
(51) Int. Cl.: B60J 7/02

(54) **VERSTEIFUNGSBLECH**

(71) Anmelder: Webasto SE, 82131 Stockdorf (DE)
(72) Erfinder: GERING, Sebastian, 82131 Stockdorf (DE); WALCHER, Kilian, 82131 Stockdorf (DE); POPOVICI, Andrei, 82131 Stockdorf (DE)
(74) Vertreter: Epping - Hermann - Fischer

(57) **Zusammenfassung**

Eine Anordnung (1) für ein Fahrzeugdach (102), umfasst ein erstes Element (10) mit einem ersten Ende (11), einem zweiten Ende (12) und einer Ausnehmung (13), wobei sich das erste Element (10) vom ersten Ende (11) bis zum zweiten Ende (12) entlang einer Längsachse (101) erstreckt, und wobei das erste Element (10) mittels des ersten Endes (11) mit dem Fahrzeugdach (102) koppelbar ist. Die Anordnung (1) umfasst weiterhin ein zweites Element (20), welches als Hybridbauteil ausgeformt ist, und ein Versteifungselement (201) und eine Kunststoffumspritzung (202) umfasst, wobei das Versteifungselement (201) mittels der Kunststoffumspritzung (202) mit dem zweiten Ende (12) des ersten Elements (10) gekoppelt ist, und wobei das erste Element (10) relativ zum zweiten Element (20) um ein Drehelement (203) schwenkbar angeordnet ist.

## Beschreibung

Die Erfindung betrifft eine Anordnung und ein korrespondierendes Verfahren zum Herstellen einer Anordnung für ein Fahrzeugdach und ein System für ein Kraftfahrzeug mit einem Fahrzeugdach, die eine einfache und stabile Mechanik für das Fahrzeugdach ermöglichen.

Anordnungen für Fahrzeugdächer weisen gegebenenfalls Mechaniken auf, die zum Beispiel ein Öffnen des Fahrzeugdachs oder eines Deckels in dem Fahrzeugdach ermöglichen. Eine solche Anordnung mit einem Deckel für ein Fahrzeugdach ist beispielsweise als außengeführtes Schiebedach, ein sogenanntes Outerslider-Roof, realisiert. Ein Outerslider-Roof weist vorne und hinten jeweils beidseitig einen Ausstellhebel auf. Die Ausstellhebel sind schwenkbar mit dem Dachpanel gekoppelt und schwenkverschieblich in einer fahrzeugfesten Führungsschiene angeordnet. Die Steuerung der Hebel erfolgt mittels Kulissen in längsverschieblichen Schlitten und fahrzeugfesten Kulissen.

Ein weiteres Beispiel für eine solche Anordnung mit einem Deckel für ein Fahrzeugdach ist als Spoilerdach bekannt, welches bei einem Öffnungsvorgang, zum Beispiel mittels eines Ausstellhebels, angehoben und mittels eines Antriebsschlittens in Richtung eines Fahrzeughecks verschoben wird. An seitlichen Bereichen des Deckels sind üblicherweise Führungsmechaniken vorgesehen, um den Deckel in eine Lüfterstellung anzuheben und gegebenenfalls zum weiteren Freigeben der Dachöffnung in Öffnungsrichtung zu verschieben. Die dazu befähigten Führungsmechaniken weisen zum Beispiel Hebellager und/oder Kulissenführungen auf. Eine solche Anordnung, die ein Ausstellen und Verschieben eines Deckels ermöglicht, ist zum Beispiel in dem Dokument DE 10 2011 015833 A1 beschrieben.

Es ist eine Aufgabe, die der Erfindung zugrunde liegt, eine Anordnung sowie ein korrespondierendes Verfahren zum Herstellen einer Anordnung für ein Fahrzeugdach zu schaffen, die eine einfache und stabile Konstruktion von Mechaniken für das Fahrzeugdach ermöglichen.

Die Aufgabe wird durch die Merkmale der unabhängigen Patentansprüche gelöst.

Gemäß einer Ausführungsform umfasst eine Anordnung für ein Fahrzeugdach ein erstes Element mit einem ersten Ende, einem zweiten Ende und einer Ausnehmung. Das erste Element erstreckt sich vom ersten Ende bis zum zweiten Ende entlang einer Längsachse. Das erste Element ist mittels des ersten Endes mit dem Fahrzeugdach koppelbar. Die Anordnung umfasst weiter ein zweites Element, welches als Hybridbauteil ausgeformt ist, und ein Versteifungselement und eine Kunststoffumspritzung umfasst. Das Versteifungselement ist mittels der Kunststoffumspritzung mit dem zweiten Ende des ersten Elements gekoppelt und das erste Element ist relativ zum zweiten Element um ein Drehelement schwenkbar angeordnet.

Das erste Element ist beispielsweise ein Ausstellhebel. Das zweite Element ist beispielsweise als ein Antriebsschlitten ausgebildet. Der Ausstellhebel ist mittels des ersten Endes mit dem Deckel und mittels des zweiten Endes mit dem Antriebsschlitten gekoppelt. Der Antriebsschlitten ist wiederum in einer Führungsschiene angeordnet oder mit dieser gekoppelt, um den Deckel zum Freigeben der Dachöffnung in dem Fahrzeugdach aufstellen und zum Verschließen der Dachöffnung in dem Fahrzeugdach einstellen zu können.

Mittels einer solchen Anordnung ist auf kostengünstige und einfache Weise eine Anordnung für ein Fahrzeugdach realisierbar, die lediglich zwei zueinander drehbare Elemente umfasst. Es wird kein zusätzliches Drehelement benötigt, um ein zuverlässiges Schwenken des ersten und zweiten Elements relativ zueinander zu ermöglichen. Dadurch, dass das zweite Element beispielsweise mittels Spritzguss ausgebildet ist und die Kunststoffumspritzung des zweiten Elements das Kopplungselement darstellt, ist es nicht erforderlich, zusätzliche Kopplungselemente, wie Bolzen oder Nieten, vorzusehen, um das zweite Element an dem ersten Element anzubringen.

Somit wird mittels der beschriebenen Anordnung zum Beispiel ein Beitrag für einen einfachen Montageprozess einer platzsparenden Führungs- beziehungsweise Deckelmechanik geleistet, welche ein zuverlässiges und kontrolliertes Bewegen des Fahrzeugdachs und/oder eines Deckels ermöglicht. Beispielsweise sind das erste und zweite Element als Hebel miteinander gekoppelt und realisieren einen Teil einer Hebelmechanik zum Öffnen des Fahrzeugdachs.

Das Fahrzeugdach ist zum Beispiel als ein außengeführtes Schiebedach, ein sogenanntes Outerslider-Roof oder als ein Cabriodach ausgebildet, an dessen seitlichen Bereichen jeweils ein Paar der beiden beschriebenen Elemente angeordnet ist und ein Öffnen beziehungsweise Falten des Outerslider-Roof oder des Cabriodachs ermöglicht. Darüber hinaus können das erste und zweite Element auch Komponenten einer Verdunkelungsvorrichtung oder weiterer Anordnungen für ein Fahrzeugdach realisieren, die zueinander schwenkbare Elemente benötigen.

Die Verwendung eines umspritzten Versteifungselements ermöglicht zusätzlich eine stabile Führungs- beziehungsweise Deckelmechanik, die auch für große, schwere Deckel geeignet ist. Im Vergleich zu einem Antriebschlitten aus dem Stand der Technik, der vollständig aus Kunststoff gebildet ist, bietet das umspritzte Versteifungselement eine höhere Lebensdauer und verhindert Fehlfunktionen des Fahrzeugdachs aufgrund von vorzeitigem Materialversagen.

Gemäß zumindest einer Ausführungsform umfasst das Versteifungselement, eine Hauptfläche und eine erste Lasche, die aus einem ersten Teilbereich der Hauptfläche geformt ist. Die erste Lasche weist ein erstes Teilstück und ein zweites Teilstück auf. Das erste Teilstück ist senkrecht zu der Hauptfläche ausgerichtet, um eine erste Stützwand auszubilden. Das zweite Teilstück ist senkrecht zu dem ersten Teilstück ausgerichtet und gleichgerichtet zur ersten Hauptfläche ausgerichtet, um einen Haltefinger auszubilden. Das erste Teilstück ist mit dem zweiten Teilstück einstückig ausgebildet.

Die Verwendung des Versteifungselements und Ausformen der ersten Lasche aus der Hauptfläche des Versteifungselements ermöglicht es, dass das Material des Versteifungselements nahezu vollständig verwendet wird ohne dass zusätzliche Bauteile montiert werden müssen, zum Beispiel mittels Schweißungen oder Befestigungsmitteln, wie Nieten, Schrauben, Bolzen oder dergleichen.

Die erste Stützwand und der Haltefinger bieten zusätzlichen Halt für das erste Element, was insgesamt eine stabilere Anordnung schafft.

Gemäß zumindest einer Ausführungsform umfasst das Versteifungselement eine zweite Lasche, die aus einem zweiten Teilbereich der Hauptfläche geformt ist. Die zweite Lasche ist senkrecht zu der Hauptfläche ausgerichtet, um eine zweite Stützwand auszubilden.

Zudem wird durch die Verwendung von Teilbereichen des Versteifungselements als Laschen, das Gewicht des zweiten Elements insgesamt gering gehalten, da keine weiteren Bauteile notwendig sind, um beispielsweise den Antriebsschlitten auszuformen. Zudem werden nur Teilbereiche des Versteifungselements für die Laschen verwendet, die nicht notwendig für die strukturelle Stabilität des Versteifungselements sind. Somit wird bei gleichbleibender Stabilität ein Versteifungselement mit relativ geringem Gewicht bereitgestellt.

Durch Ausbilden der zweiten Stützwand wird die Stabilität der gesamten Anordnung, insbesondere quer zur Längsrichtung, weiter erhöht. Dabei sind die beiden Stützwände auf jeweils einer Seite am zweiten Ende des ersten Elements angeordnet.

Gemäß zumindest einer Ausführungsform ist die erste Stützwand entlang der Längsachse versetzt zur zweiten Stützwand auf der Hauptfläche angeordnet.

Die zweite Stützwand bildet gemeinsam mit der ersten Stützwand eine Art Aufnahme für das erste Element, wodurch das erste Element stabilisiert wird und die Anordnung insgesamt eine höhere Stabilität erreicht. Um eine einfache Montage des ersten Elements und des Versteifungselements zu ermöglichen, sind die beiden Stützwände entlang der Längsachse versetzt auf der Hauptfläche des Versteifungselements angeordnet. Auf diese Weise wird ein Anordnen, beispielsweise Einhaken, des Versteifungselements am ersten Element vereinfacht.

Gemäß zumindest einer Ausführungsform realisieren der Haltefinger und die Kunststoffumspritzung das Drehelement. Das Drehelement erstreckt sich in die Ausnehmung des ersten Elements.

Das Versteifungselement weist das Drehelement in Form des Haltefingers auf. Alternativ bildet die Kunststoffumspritzung das Drehelement aus oder der Haltefinger und die Kunststoffumspritzung realisieren gemeinsam das Drehelement, das sich durch eine Ausnehmung an dem zweiten Ende des ersten Elements erstreckt.

Mit der Verwendung des Haltefingers und der Kunststoffumspritzung als Drehelement wird vermieden, dass ein weiteres Element notwendig ist, um das erste und zweite Element relativ zueinander schwenkbar anzuordnen.

Das Drehelement ist entweder umspritzt und formschlüssig mit der Ausnehmung verbunden, so dass beispielsweise der Ausstellhebel rotierbar gelagert ist. Alternativ realisiert die Kunststoffumspritzung das Drehelement, das ebenfalls formschlüssig mit der Ausnehmung verbunden ist, so dass beispielsweise der Ausstellhebel rotierbar gelagert ist. Zudem bietet das Drehelement den weiteren Vorteil, dass keine zusätzlichen Kopplungselemente, wie Bolzen oder Nieten, benötigt werden, um das Versteifungselement mit dem ersten Element zu koppeln.

Gemäß zumindest einer Ausführungsform ist das erste Element teilweise angespritzt und/oder umspritzt.

Das teilweise An- und/oder Umspritzen des ersten Elements bietet den Vorteil, dass es gemeinsam mit dem Versteifungselement in einem Arbeitsschritt angespritzt und/oder umspritzt wird und somit eine Kopplung zwischen dem ersten Element und dem zweiten Element ermöglicht wird, die keiner zusätzlichen Kopplungsmittel bedarf, was kostengünstig und zeitsparend ist.

Gemäß zumindest einer Ausführungsform füllt die Kunststoffumspritzung die Ausnehmung des ersten Elements vollständig aus. Das vollständige Ausfüllen der Ausnehmung mit der Kunststoffumspritzung bietet einen besonders guten Formschluss zwischen der Ausnehmung und der Kunststoffumspritzung, was zu einer höheren Stabilität der gesamten Anordnung führt.

Gemäß zumindest einer Ausführungsform umfasst das Versteifungselement ein Metall und/oder einen Kunststoff mit einer Steifigkeit, welche höher ist als die Steifigkeit der Kunststoffumspritzung.

Der für das Versteifungselement verwendete Kunststoff zeichnet sich durch eine hohe Steifigkeit und/oder Festigkeit aus. Die Steifigkeit und/oder Festigkeit des Versteifungselements ist im Vergleich zu der Steifigkeit und/oder Festigkeit der Kuntstoffumspritzung höher. Als Steifigkeit wird in diesem Zusammenhang beispielsweise eine Biegefestigkeit und/oder Verwindungssteifigkeit verstanden. Als Festigkeit wird in diesem Zusammenhang beispielsweise eine Zugfestigkeit verstanden. Ein solcher steifer Werkstoff eignet sich besonders für Anwendungen mit einer Hauptbelastungsrichtung, wie zum Beispiel beim Ausstellen und Verschieben eines Dachs.

Gemäß zumindest einer Ausführungsform ist das Versteifungselement aus einem Stahlblech ausgeformt.

Das Versteifungselement ist beispielsweise als Stahleinleger aus Stahl oder Stahlblech ausgeformt. Stahlblech bietet ein stabiles und kostengünstiges Material für das Versteifungselement.

Gemäß zumindest einer Ausführungsform ist das Versteifungselement aus einem Kohlenstofffaserverstärkten Kunststoff ausgeformt.

Faserverstärkte Kunststoffe sind sogenannte Verbundstoffe aus Fasern und Harzen. Zur Herstellung werden Glasfasern, Kohlefasern oder Aramidfasern in eine Matrix aus Epoxid-, Polyester-, Vinylester- oder Hybridharzen eingebettet. Die fertigen Kunststoffbauteile bezeichnet man als GFK-Composites (glasfaserverstärkt) oder CFK-Composites (kohlenstofffaserverstärkt). Kohlenstofffaserverstärkte Kunststoffe (CFK) zeichnen sich durch ein geringes Gewicht und große Belastbarkeit aus. Das wirkt sich in vorteilhafter Weise auf das Versteifungselement und damit auf die gesamte Anordnung aus.

Die beschriebene Anordnung weist eine geringe Anzahl an Komponenten auf und ist entsprechend mit einer geringen Anzahl an Produktions- oder Montageschritten realisierbar. Sie kann somit kostengünstig und zeitsparend hergestellt und platzsparend im Bereich eines Fahrzeugdachs integriert werden. Da keine zusätzlichen Kopplungsmittel nötig sind, um die beiden Elemente zu koppeln, wird während der Montage weniger Bauraum im Fahrzeug für die Werkzeugzugänglichkeit benötigt.

Die beschriebene Anordnung ist insbesondere mittels der unten beschriebenen Verfahren herstellbar und ermöglicht auf einfache und kostengünstige Weise eine Konstruktion einer Hebel- beziehungsweise Führungsmechanik für einen Deckel in einem Fahrzeugdach. Sämtliche Merkmale und Eigenschaften der zuvor beschriebenen Anordnung sind somit auch für das Verfahren offenbart und umgekehrt.

Gemäß einer Ausführungsform umfasst ein Verfahren zum Herstellen einer Anordnung für ein Fahrzeugdach ein Bereitstellen eines ersten Elements mit einem ersten Ende, einem zweiten Ende und einer Ausnehmung, das mittels des ersten Endes mit dem Fahrzeugdach koppelbar ist. Das Verfahren umfasst weiter ein Bereitstellen eines Versteifungselements und ein Anordnen des Versteifungselements in die Ausnehmung und/oder ein Anordnen des Versteifungselements angrenzend an die Ausnehmung. Das Verfahren umfasst weiter ein Bereitstellen einer pumpfähigen Substanz mit vorgegebenen Materialeigenschaften, und ein Aufbringen der bereitgestellten Substanz mittels Spritzguss an einer vorgegebenen Position an dem zweiten Ende des ersten Elements und an dem Versteifungselement und dadurch Ausbilden eines zweiten Elements, sodass das das zweite Ende des ersten Elements mit dem Versteifungselement gekoppelt ist und das erste Element relativ zum zweiten Element um ein Drehelement schwenkbar ist.

Mittels eines solchen Verfahrens ist auf kostengünstige und einfache Weise eine Anordnung für ein Fahrzeugdach realisierbar, die lediglich zwei zueinander drehbare Elemente umfasst. Es wird kein zusätzliches Drehelement benötigt, um ein zuverlässiges Schwenken des ersten und zweiten Elements relativ zueinander zu ermöglichen. Dadurch, dass das zweite Element beispielsweise mittels Spritzguss ausgebildet ist, ist es nicht erforderlich, zusätzliche Kopplungselemente, wie Bolzen oder Nieten, vorzusehen, um das zweite Element an dem ersten Element anzubringen.

Beim Ausbilden des zweiten Elements mittels An- und/oder Umspritzen des Versteifungselements und An- und/oder Umspritzen des zweiten Endes des ersten Elements ist gewährleistet, dass das erste Element nicht dauerhaft am zweiten Element haftet und eine relative Drehbewegung dieser beiden Komponenten zueinander möglich ist. Das erste Element ist beispielsweise als Ausstellhebel aus Metall realisiert, an dem die bereitgestellte Substanz aufgebracht wird. Das zweite Element ist beispielsweise als Antriebsschlitten ausgebildet, der ein kunststoffumspritztes Versteifungselement umfasst. Die bereitgestellte Substanz weist entsprechend vorgegebene Materialeigenschaften auf, die ein nichthaftendes oder leicht zu lösendes Verhalten der Form des Antriebsschlittens an dem Ausstellhebel aufweist. Beispielsweise ist die Kunststoffumspritzung des Antriebsschlittens aus einer Materialkombination aus Polyamid und Kohlefaser oder aus Polyoxymethylen und Kohlfaser oder einem anderen Thermoplast mit hoher mechanischer Festigkeit und Steifigkeit gefertigt und weist vorteilhaft hinsichtlich angrenzender Flächen und Kanten zu dem Ausstellhebel eine geringe Reibung auf, sodass in Abstimmung der jeweiligen verwendeten Materialen ein zuverlässiges und effizientes Verschwenken des Ausstellhebels relativ zum Antriebsschlitten realisiert ist.

Gemäß einer Weiterbildung des Verfahrens umfasst das Bereitstellen des ersten Elements ein Stanzen und/oder Prägen eines Metallrohlings und dadurch Ausbilden des ersten Elements mit dem ersten und zweiten Ende und der Ausnehmung.

Auf diese Weise können auch Kanten, Biegungen, vorspringende Bereiche und/oder weitere Ausnehmungen an vorgegebenen Positionen des Metallrohlings ausgebildet werden, um beispielsweise den Ausstellhebel für ein zuverlässiges und sicheres Führen des Deckels auszugestalten.

Gemäß einer Weiterbildung des Verfahrens umfasst das Bereitstellen des Versteifungselements ein Stanzen und/oder Prägen eines Metallrohlings und/oder Ausformen eines Kunststoffs mit einer Steifigkeit, welche höher ist als die Steifigkeit der Kunststoffumspritzung, und dadurch Ausbilden des Versteifungselements mit einer Hauptfläche. Das Verfahren umfasst weiter ein
Formen der Hauptfläche und dadurch Ausbilden des Versteifungselements mit einer ersten Lasche als eine erste Stützwand, und ein Formen der Hauptfläche und dadurch Ausbilden des Versteifungselements mit der ersten Lasche als ein Haltefinger.

Auf diese Weise können auch Kanten, Biegungen, vorspringende Bereiche und/oder weitere Ausnehmungen an vorgegebenen Positionen des Metallrohlings und/oder des Kunststoffes mit einer Steifigkeit, welche höher ist als die Steifigkeit der Kunststoffumspritzung, ausgebildet werden, um beispielsweise den Antriebsschlitten zuverlässig und sicher innerhalb der Führungsschiene anzuordnen.

Gemäß einer Weiterbildung des Verfahrens umfasst das Bereitstellen des Versteifungselements ein Formen der Hauptfläche und dadurch Ausbilden des Versteifungselements mit einer zweiten Lasche als eine zweite Stützwand.

Zum Formen gehören beispielsweise Umformverfahren, wie das Strangpressen, das Tiefziehen und das Biegen. Sowohl Kaltumformverfahren als auch Warmumformverfahren können beim Herstellen des Versteifungselements verwendet werden.

Des Weiteren gehören zum Formen beispielsweise Herstellungsverfahren von faserverstärkten Kunststoffen, wie das Handlaminierverfahren, das Vakuumverfahren, das Infusionsverfahren und das Pressverfahren.
Gemäß zumindest einer Ausführungsform wird ein System für ein Kraftfahrzeug mit einem Fahrzeugdach angegeben, das eine Anordnung gemäß einer der hier beschriebenen Ausführungsformen aufweist, einen Deckel, der dazu ausgebildet ist eine Dachöffnung in dem Fahrzeugdach wahlweise freizugeben und zu verschließen. Der Deckel ist mit dem ersten Element gekoppelt und das zweite Element ist mit einer Führungsschiene gekoppelt, um den Deckel zum Freigeben der Dachöffnung in dem Fahrzeugdach aufzustellen und zum Verschließen der Dachöffnung in dem Fahrzeugdach einzustellen.
Das beschriebene System für ein Kraftfahrzeug mit einem Fahrzeugdach realisiert zum Beispiel ein Dachmodul, welches in dem Fahrzeugdach des Kraftfahrzeugs angeordnet werden kann, um mittels der beschriebenen Mechanik ein zuverlässiges und einfaches Aufrichten, Verschieben und Wiedereinstellen des Deckels zu ermöglichen

Ausführungsbeispiele der Erfindung sind im Folgenden anhand der schematischen Zeichnungen näher erläutert.

Es zeigen:
- Figur 1: ein Fahrzeugdach in einer perspektivischen Ansicht,
- Figur 2: ein Ausführungsbeispiel einer Anordnung in einer Draufsicht,
- Figur 3: ein Ausführungsbeispiel einer Anordnung in einer Seitenansicht entlang der Schnittachse A-A,
- Figur 4: ein Ausführungsbeispiel einer Anordnung in einer Frontansicht entlang der Schnittachse B-B,
- Figur 5: ein Ausführungsbeispiel einer Anordnung in einer perspektivischen Ansicht,
- Figur 6: ein Ausführungsbeispiel einer Anordnung in einer weiteren perspektivischen Ansicht,
- Figur 7: ein Ausführungsbeispiel einer Anordnung in einer weiteren perspektivischen Ansicht,
- Figur 8: ein Ablaufdiagramm für ein Verfahren zum Herstellen einer Anordnung für einen Deckel.

Elemente gleicher Konstruktion und Funktion sind figurenübergreifend mit den gleichen Bezugszeichen gekennzeichnet.

In dieser Beschreibung beziehen sich Begriffe, wie "oben", "unten", "Oberseite", "Unterseite", "innen" und "außen", "vorne" und "hinten", auf Ausrichtungen und Orientierungen, wie sie in den Figuren illustriert und bei einem betriebsbereiten Kraftfahrzeug üblich sind.

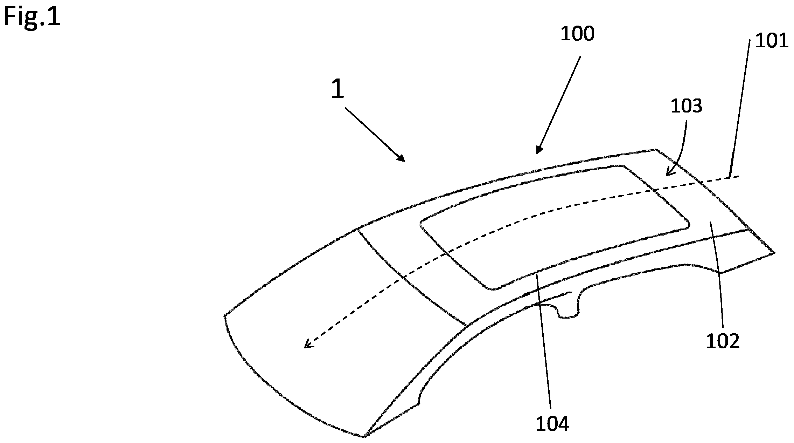

Figur 1 zeigt in einer perspektivischen Ansicht schematisch ein System für ein Kraftfahrzeug 100, das einen Deckel 103 und eine Anordnung 1 umfasst. Das Kraftfahrzeug 100 erstreckt sich entlang einer Längsrichtung 101, welche im normalen Betrieb des Kraftfahrzeugs 100 in Fahrtrichtung zeigt. Der Deckel 103 ist in einem Fahrzeugdach 102 des Kraftfahrzeugs 100 angeordnet und ist beispielsweise relativ zum Fahrzeugdach 102 verschiebbar ausgebildet, um wahlweise eine Dachöffnung 104 des Fahrzeugdachs 102 freizugeben und zu verschließen.

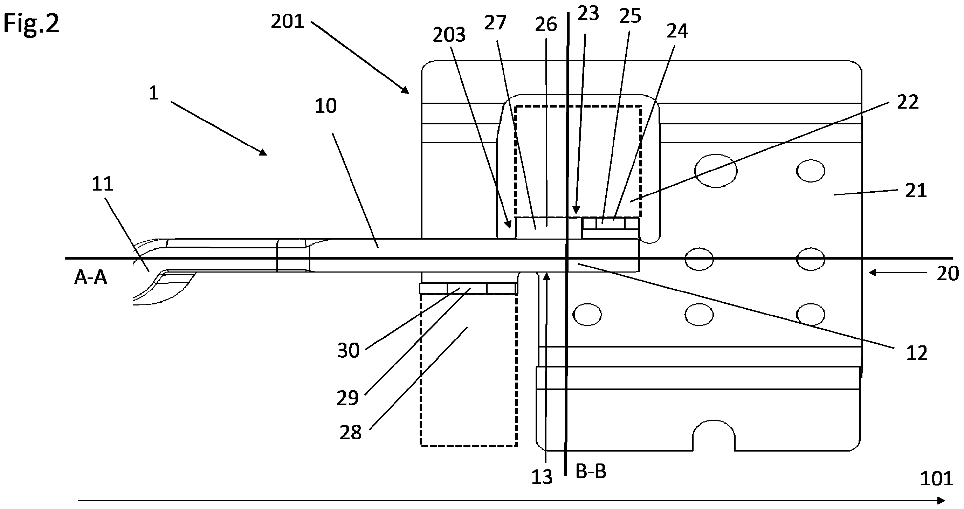

Mittels der Anordnung 1 ist eine einfache und platzsparende Führungsmechanik realisierbar, die kostengünstig herstellbar ist und die ein zuverlässiges Ausstellen, Verschieben und Einstellen des Deckels 103 ermöglicht. Die Anordnung 1 und ein korrespondierendes Verfahren zum Herstellen einer solchen Anordnung 1 werden anhand der nachfolgenden Figuren 2 bis 4 und Figur 5 näher erläutert.

Figur 2 zeigt ein Ausführungsbeispiel der Anordnung 1 in einer Draufsicht. Die Anordnung 1 weist ein erstes Element 10 mit einem ersten Ende 11, einem zweiten Ende 12 und einer Ausnehmung 13 auf. Das erste Element 10 erstreckt sich vom ersten Ende 11 zum zweiten Ende entlang der Längsrichtung 101, welche im normalen Betrieb des Kraftfahrzeugs 100 in Fahrtrichtung zeigt. Weiterhin weist die Anordnung 1 ein zweites Element 20 auf. In dem dargestellten Ausführungsbeispiel ist das erste Element 10 als ein Ausstellhebel und das zweite Element 20 als ein Antriebsschlitten ausgebildet. Das zweite Element 20 ist als Hybridbauteil ausgeformt und umfasst ein Versteifungselement 201 und eine Kunststoffumspritzung 202 (nicht dargestellt in Figur 2). Das erste Element 10 ist mit dem Versteifungselement 201 über die Kunststoffumspritzung 202 (nicht dargestellt in Figur 2) gekoppelt.

Das Versteifungselement 201 ist beispielsweise aus Stahlblech und umfasst eine Hauptfläche 21. Aus einem ersten Teilbereich 22 der Hauptfläche 21 ist eine erste Lasche 23 geformt. In Figur 2 ist der erste Teilbereich 22 durch ein gestricheltes Rechteck dargestellt, da sich dieser Bereich vor dem Formen des Versteifungselements 201 an dieser Stelle befindet und nach dem Formen die erste Lasche 23 bildet. Die erste Lasche 23 weist ein erstes Teilstück 24 und ein zweites Teilstück 26 auf. Das erste Teilstück 24 ist senkrecht zur Hauptfläche 21 ausgerichtet und bildet eine erste Stützwand 25 aus. Das zweite Teilstück 26 ist senkrecht zum ersten Teilstück 24 ausgerichtet und gleichgerichtet zur Hauptfläche 21 und bildet einen Haltefinger 27 aus. Der Haltefinger 27 erstreckt sich in die Ausnehmung 13 des ersten Elements 10.

Aus einem zweiten Teilbereich 28 der Hauptfläche 21 ist eine zweite Lasche 29 geformt. In Figur 2 ist der zweite Teilbereich 28 durch ein gestricheltes Rechteck dargestellt, da sich dieser Bereich vor dem Formen des Versteifungselements 201 an dieser Stelle befindet und nach dem Formen die zweite Lasche 29 bildet. Die zweite Lasche 29 bildet eine zweite Stützwand 30 aus. Die beiden Stützwände 25, 30 sind in Längsrichtung 101 versetzt angeordnet und befinden sich jeweils auf einer Seite des zweiten Endes 12 des ersten Elements 10. Mit Hilfe der Stützwände 25, 30 wird das erste Element 10 in einer stabilen Position gehalten. Der Haltefinger 27 erhöht die Stabilität der Anordnung 1 noch weiter.

Das Versteifungselement 201 ist vollständig angespritzt und/oder umspritzt und das zweite Ende 12 des ersten Elements 10 ist teilweise angespritzt und/oder umspritzt. Die Darstellung der Umspritzung wurde der Übersichtlichkeit halber in Figur 2 weggelassen. Der angespritzte und/oder umspritzte Haltefinger 27 realisiert ein Drehelement 203, sodass ein zuverlässiges und effizientes Verschwenken des ersten Elements 10 relativ zum zweiten Element 20 realisiert ist. Der verwendete Spritzguss weist entsprechend vorgegebene Materialeigenschaften auf, die ein nichthaftendes oder leicht zu lösendes Verhalten des ersten Elements 10 vom zweiten Element 20 ermöglichen.

Alternativ ragt der Haltefinger 27 nicht in die Ausnehmung 13 rein, sondern bildet einen Teil der ersten Stützwand 25. In diesem Fall realisiert nur die Kunststoffumspritzung 202 (nicht dargestellt in Figur 2) das Drehelement 203. Die Kunststoffumspritzung 202 kann die Ausnehmung 13 vollständig oder teilweise ausfüllen. Bei einem vollständigen Ausfüllen der Ausnehmung 13 ist ein besserer Formschluss möglich, sodass das erste Element 10 rotierbar gelagert ist und die Stabilität der Anordnung 1 erhöht wird.

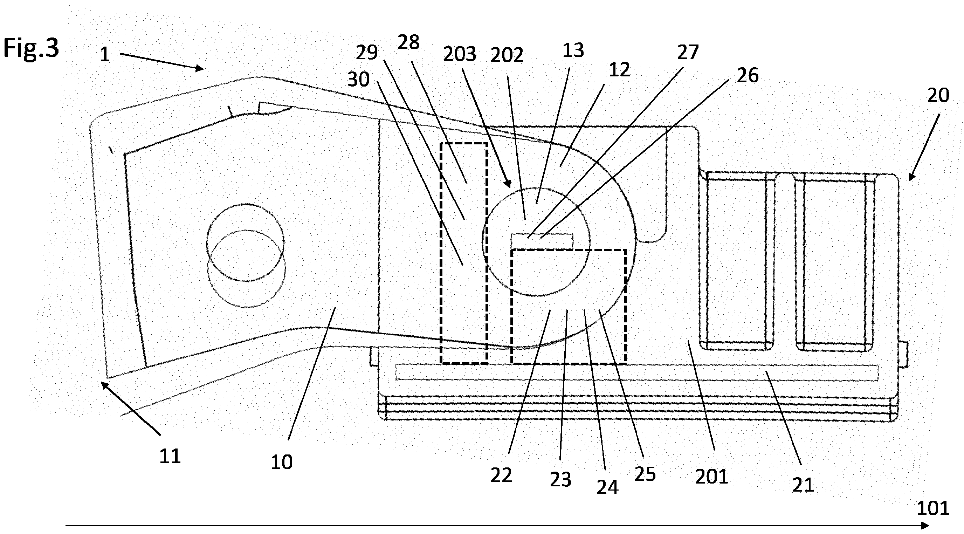

Figur 3 zeigt in einem Querschnitt entlang der Achse A-A aus Figur 2, die gleichgerichtet mit der Längsachse 101 ist, die Anordnung 1. Die Anordnung 1 umfasst das erste Element 10 mit dem ersten Ende 11, dem zweiten Ende 12 und der Ausnehmung 13, und das zweite Element 20. Das erste Element 10 ist mit dem Versteifungselement 201 mittels der Kunststoffumspritzung 202 gekoppelt. Das Versteifungselement 201 umfasst die Hauptfläche 21 mit der ersten Lasche 23, die aus dem ersten Teilbereich 22 geformt ist. Die erste Lasche 23 weist das erste Teilstück 24 und das zweite Teilstück 26 auf. Das erste Teilstück 24 ist senkrecht zu Hauptfläche 21 ausgerichtet und bildet die erste Stützwand 25 aus. In Figur 3 ist die erste Stützwand 25 durch ein gestricheltes Rechteck dargestellt, welche sich in der Bildebene hinter dem ersten Element 10 befindet. Das zweite Teilstück 26 ist senkrecht zum ersten Teilstück 24 ausgerichtet und gleichgerichtet zur Hauptfläche 21 und bildet den Haltefinger 27 aus. Der Haltefinger 27 erstreckt sich in die Ausnehmung 13 des ersten Elements 10.

Aus dem zweiten Teilbereich 28 der Hauptfläche 21 ist die zweite Lasche 29 geformt. Die zweite Lasche 29 bildet die zweite Stützwand 30 aus. In Figur 3 ist die zweite Stützwand 30 durch ein gestricheltes Rechteck dargestellt, welche sich in der Bildebene vor dem ersten Element 10 befindet. Die beiden Stützwände 25, 30 sind in Längsrichtung 101 versetzt angeordnet und befinden sich jeweils auf einer Seite des zweiten Endes 12 des ersten Elements 10. Mit Hilfe der beiden Stützwände 25, 30 wird das erste Element 10 in einer stabilen Position gehalten. Der Haltefinger 27 erhöht die Stabilität der Anordnung 1 noch weiter.

In diesem Ausführungsbeispiel realisiert die Kunststoffumspritzung 202 und der Haltefinger 27 das Drehelement 203. Die Kunststoffumspritzung 202 umgibt das Versteifungselement 201 mit dem Haltefinger 27 und füllt die Ausnehmung 13 vollständig aus.

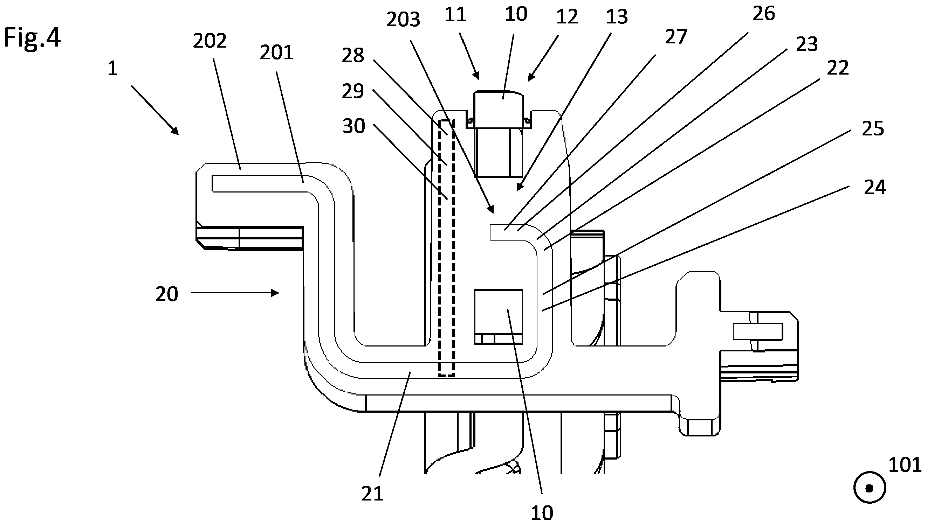

Figur 4 zeigt in einem Querschnitt entlang der Achse B-B aus Figur 2, die senkrecht zur Längsachse 101 ausgerichtet ist, die Anordnung 1. Die Anordnung 1 umfasst das erste Element 10 mit dem ersten Ende 11, dem zweiten Ende 12 und der Ausnehmung 13, und das zweite Element 20. Das erste Element 10 ist mit dem Versteifungselement 201 mittels der Kunststoffumspritzung 202 gekoppelt. Das Versteifungselement 201 umfasst die Hauptfläche 21 mit der ersten Lasche 23, die aus dem ersten Teilbereich 22 geformt ist. Die erste Lasche 23 weist das erste Teilstück 24 und das zweite Teilstück 26 auf. Das erste Teilstück 24 ist senkrecht zur Hauptfläche 21 ausgerichtet und bildet die erste Stützwand 25 aus. Das zweite Teilstück 26 ist senkrecht zum ersten Teilstück 24 ausgerichtet und gleichgerichtet zur Hauptfläche 21 und bildet den Haltefinger 27 aus. Der Haltefinger 27 erstreckt sich in die Ausnehmung 13 des ersten Elements 10. Der Haltefinger 27 kann alternativ nicht in die Ausnehmung 13 ragen und einen Teil der ersten Stützwand 25 bilden. In diesem Fall realisiert nur die Kunststoffumspritzung 202 das Drehelement 203.

Aus dem zweiten Teilbereich 28 der Hauptfläche 21 ist die zweite Lasche 29 geformt. Die zweite Lasche 29 bildet die zweite Stützwand 30 aus. In Figur 4 ist die zweite Stützwand 30 durch ein gestricheltes Rechteck dargestellt, welche sich in der Bildebene hinten befindet bzw. in Längsrichtung 101 hinter der ersten Stützwand 25 liegt. Die Längsrichtung in Figur 4 ist durch einen Kreis in dem sich ein Punkt befindet, dargestellt. Der Punkt stellt eine Pfeilspitze dar, die aus der Bildebene herauszeigt. Die beiden Stützwände 25, 30 sind in Längsrichtung 101 versetzt angeordnet und befinden sich jeweils auf einer Seite des zweiten Endes 12 des ersten Elements 10. Mit Hilfe der beiden Stützwände 25, 30 wird das erste Element 10 in einer stabilen Position gehalten. Der Haltefinger 27 erhöht die Stabilität der Anordnung 1 zudem noch weiter.

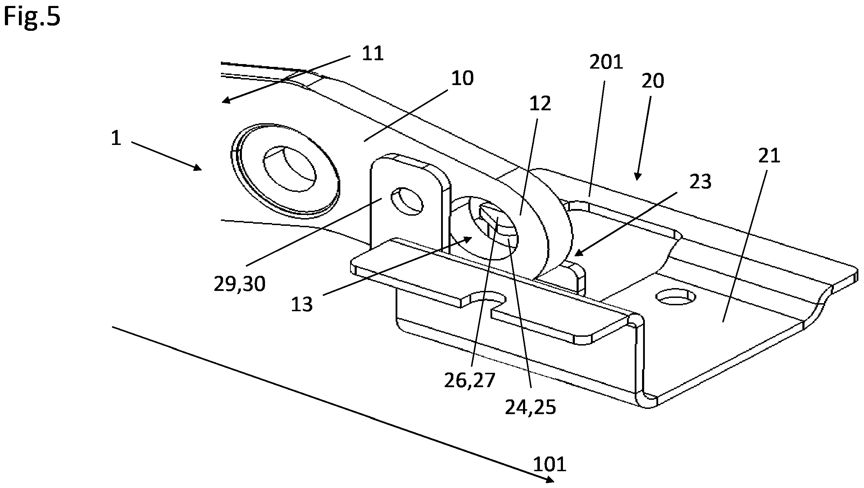

Figur 5 zeigt ein Ausführungsbeispiel der Anordnung 1 in einer perspektivischen Ansicht. Die Anordnung 1 umfasst das erste Element 10 mit dem ersten Ende 11, dem zweiten Ende 12 und der Ausnehmung 13, und das zweite Element 20. Das erste Element 10 ist mit dem Versteifungselement 201 mittels der Kunststoffumspritzung 202 gekoppelt. In Figur 5 wird der Übersichtlichkeit halber die Kunststoffumspritzung 202 nicht dargestellt. Das Versteifungselement 201 umfasst die Hauptfläche 21 mit der ersten Lasche 23. Die erste Lasche 23 weist das erste Teilstück 24 und das zweite Teilstück 26 auf. Das erste Teilstück 24 ist senkrecht zur Hauptfläche 21 ausgerichtet und bildet die erste Stützwand 25 aus. Das zweite Teilstück 26 ist senkrecht zum ersten Teilstück 24 ausgerichtet und gleichgerichtet zur Hauptfläche 21 und bildet den Haltefinger 27 aus. Der Haltefinger 27 erstreckt sich in die Ausnehmung 13 des ersten Elements 10. Die Hauptfläche 21 umfasst weiterhin die zweite Lasche 29, welche die zweite Stützwand 30 ausbildet. Die beiden Stützwände 25, 30 sind in Längsrichtung 101 versetzt angeordnet und befinden sich jeweils auf einer Seite des zweiten Endes 12 des ersten Elements 10. Mit Hilfe der beiden Stützwände 25, 30 wird das erste Element 10 in einer stabilen Position gehalten. Der Haltefinger 27 erhöht die Stabilität der Anordnung 1 noch weiter.

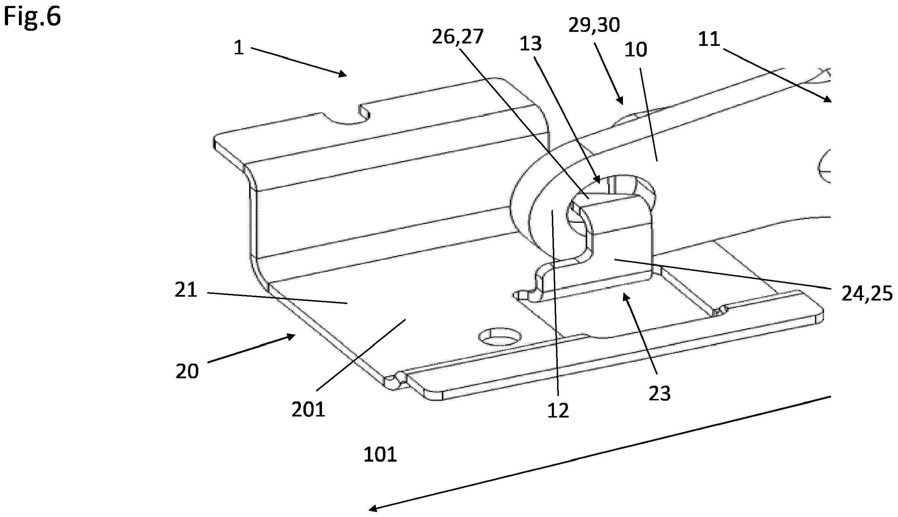

Figur 6 zeigt ein Ausführungsbeispiel der Anordnung 1 in einer weiteren perspektivischen Ansicht. Die Anordnung 1 umfasst das erste Element 10 mit dem ersten Ende 11, dem zweiten Ende 12 und der Ausnehmung 13, und das zweite Element 20. Das erste Element 10 ist mit dem Versteifungselement 201 mittels der Kunststoffumspritzung 202 gekoppelt. In Figur 6 wird der Übersichtlichkeit halber die Kunststoffumspritzung 202 nicht dargestellt. Das Versteifungselement 201 umfasst die Hauptfläche 21 mit der ersten Lasche 23. Die erste Lasche 23 weist das erste Teilstück 24 und das zweite Teilstück 26 auf. Das erste Teilstück 24 ist senkrecht zur Hauptfläche 21 ausgerichtet und bildet die erste Stützwand 25 aus. Das zweite Teilstück 26 ist senkrecht zum ersten Teilstück 24 ausgerichtet und gleichgerichtet zur Hauptfläche 21 und bildet den Haltefinger 27 aus. Der Haltefinger 27 erstreckt sich in die Ausnehmung 13 des ersten Elements 10. Die Hauptfläche 21 umfasst weiterhin die zweite Lasche 29, welche die zweite Stützwand 30 ausbildet. Die beiden Stützwände 25, 30 sind in Längsrichtung 101 versetzt angeordnet und befinden sich jeweils auf einer Seite des zweiten Endes 12 des ersten Elements 10. Mit Hilfe der beiden Stützwände 25, 30 wird das erste Element 10 in einer stabilen Position gehalten. Der Haltefinger 27 erhöht die Stabilität der Anordnung 1 noch weiter.

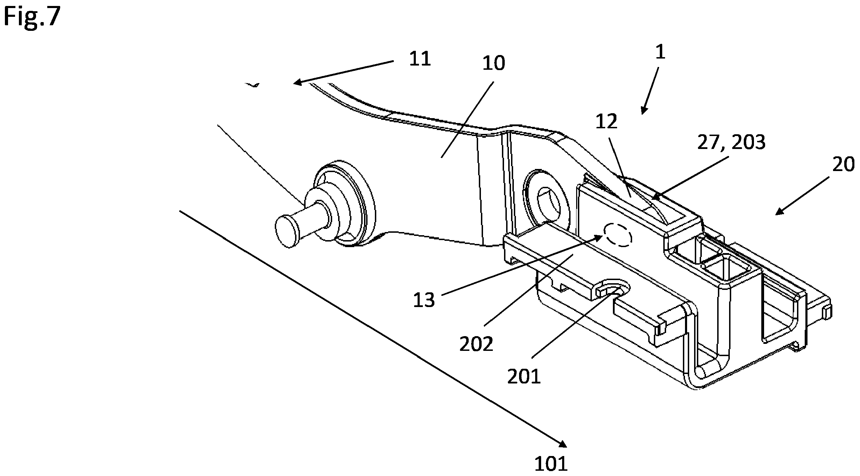

Figur 7 zeigt ein Ausführungsbeispiel der Anordnung 1 in einer weiteren perspektivischen Ansicht. Vergleichbar zu Figur 5 zeigt Figur 7 die Anordnung 1, welche das erste Element 10 mit dem ersten Ende 11, dem zweiten Ende 12 und der Ausnehmung 13 (in Figur als gestrichelter Kreis dargestellt), und das zweite Element 20 umfasst. In Figur 7 umgibt die Kunststoffumspritzung 202 das Versteifungselement 201 mit dem Haltefinger 27 und füllt die Ausnehmung 13 vollständig aus. In diesem Ausführungsbeispiel realisiert die Kunststoffumspritzung 202 und der Haltefinger 27 das Drehelement 203.

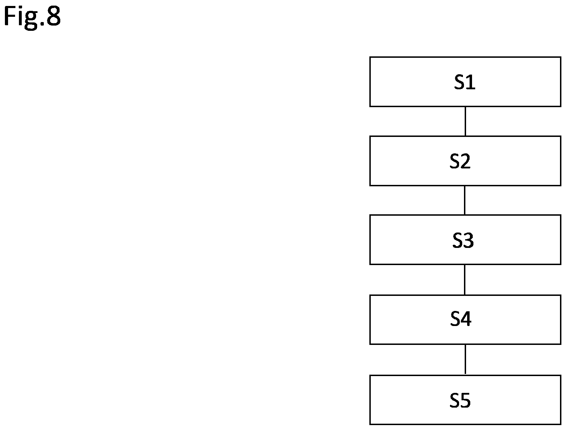

Figur 8 zeigt ein Ablaufdiagramm für ein Verfahren zum Herstellen der Anordnung 1, bei dem in einem Schritt S1 das erste Element 10 mit vorgegebener Geometrie bereitgestellt wird. Die Geometrie umfasst insbesondere die Ausnehmung 13 an dem zweiten Ende 12 und gegebenenfalls auch radiale Bereiche. Die radialen Bereiche ermöglichen ein Schwenken des Versteifungselements 201, bzw. des zweiten Elements 20, das mit dem ersten Element 10 gekoppelt ist. Gegebenenfalls wird das erste Element 10 nicht mit vorgegebener Geometrie bereitgestellt, sondern in dem Schritt S1 mittels Stanzens und/oder Prägens eines Metallrohlings ausgebildet. Auf diese Weise können auch Kanten, Biegungen, vorspringende Bereiche und/oder weitere Ausnehmungen an vorgegebenen Positionen des Metallrohlings ausgebildet werden, um das erste Element 10 für ein zuverlässiges und sicheres Führen des Deckels 103 auszugestalten.

In einem weiteren Schritt S2 wird das Versteifungselement 201 mit vorgegebener Geometrie bereitgestellt. Die Geometrie umfasst insbesondere die Hauptfläche 21, die erste Lasche 23 als erste Stützwand 25 und Haltefinger 27, und die zweite Lasche 29 als zweite Stützwand 30. Gegebenenfalls wird das Versteifungselement 201 nicht mit vorgegebener Geometrie bereitgestellt, sondern in dem Schritt S2 mittels Stanzens und/oder Prägens eines Metallrohlings und/oder Formens des Kunststoffes mit erhöhter Steifigkeit ausgebildet. Erhöhte Steifigkeit bedeutet in diesem Zusammenhang, dass der Kunststoff aus dem das Versteifungselement 201 gebildet ist, eine Steifigkeit aufweist, welche höher ist als die Steifigkeit der Kunststoffumspritzung 202. Auf diese Weise können auch Kanten, Biegungen, vorspringende Bereiche und/oder weitere Ausnehmungen an vorgegebenen Positionen des Metallrohlings ausgebildet werden. Beispielsweise werden auf diese Weise Gleitflächen des Versteifungselements 201 hergestellt, die in Führungsschienen geführt werden.

In einem weiteren Schritt S3 wird das erste Element 10 zum Beispiel gezielt in einem Werkzeug positioniert und eingespannt, welches das Ausbilden der Kunststoffumspritzung 203 mittels Spritzguss ermöglicht. In einem weiteren Schritt S4 wird das Versteifungselement 201 zum Beispiel gezielt in dem Werkzeug positioniert, in die Ausnehmung 13 und/oder angrenzend an die Ausnehmung 13 anordnet und eingespannt, welches das Ausbilden der Kunststoffverbindung mittels Spritzguss ermöglicht. Ein solches Werkzeug umfasst beispielsweise ein Ober- und Unterwerkzeug mit vorgegebenen Ausnehmungen und Kavitäten die die auszubildende Form der Kunststoffumspritzung 202 bestimmen.

In einem weiteren Schritt S5 werden vorgegebene Kavitäten des Werkzeugs mit einer bereitgestellten Substanz aufgefüllt und dadurch die Kunststoffumspritzung 202 an oder um das zweite Ende 12 des ersten Elements 10 und an oder um das vollständige Versteifungselement 201 gezielt ausgebildet. Beim Ausbilden der Kunststoffumspritzung 202 wird gewährleistet, dass diese nicht dauerhaft an dem ersten Element 10 haftet und somit eine relative Drehbewegung dieser beiden Komponenten 10, 20 zueinander möglich ist. Diesbezüglich werden zum Beispiel die Materialien des ersten Elements 10 und der Kunststoffumspritzung 202 aufeinander abgestimmt.

Das erste Element 10 und das Versteifungselement 201 werden auf diese Weise gemeinsam angespritzt und/oder umspritzt, wodurch weniger Schritte notwendig sind. Zudem wird auf diese Weise ein weiterer Schritt in dem die beiden Elemente 10, 20 mit zusätzlichen Kopplungselementen gekoppelt werden müssten, eingespart.

Mittels des beschriebenen Verfahrens ist auf einfache Weise eine kostengünstige und platzsparende Ausgestaltung der Anordnung 1 zum Führen des Deckels 103 realisierbar, die im Wesentlichen lediglich zwei zueinander drehbare Komponenten, das erste Element 10 und das zweite Element 20 umfasst, die ein zuverlässiges Anheben, Verschieben und Einstellen des Deckels 103 in dem Fahrzeugdach 102 ermöglichen. Es werden keine zusätzlichen Komponenten oder Prozessschritte benötigt, sodass mittels des beschriebenen Verfahrens ein Beitrag für einen einfachen Montageprozess einer platzsparenden Führungsbeziehungsweise Deckelmechanik geleistet wird.

### Bezugszeichenliste

- 1: Anordnung
- 2: Fahrzeugdach
- 3: Deckel
- 10: Erstes Element
- 11: Erstes Ende
- 12: Zweites Ende
- 13: Ausnehmung
- 20: Zweites Element
- 201: Versteifungselement
- 202: Kunststoffumspritzung
- 203: Drehelement
- 21: Hauptfläche
- 22: Erster Teilbereich
- 23: Erste Lasche
- 24: Erstes Teilstück
- 25: Erste Stützwand
- 26: Zweites Teilstück
- 27: Haltefinger
- 28: Zweiter Teilbereich
- 29: Zweite Lasche
- 30: Zweite Stützwand
- 100: Kraftfahrzeug
- 101: Längsachse
- 102: Fahrzeugdach
- 103: Deckel
- 104: Dachöffnung

## Patentansprüche

1. Anordnung (1) für ein Fahrzeugdach (102), umfassend
- ein erstes Element (10) mit einem ersten Ende (11), einem zweiten Ende (12) und einer Ausnehmung (13),
- wobei sich das erste Element (10) vom ersten Ende (11) bis zum zweiten Ende (12) entlang einer Längsachse (101) erstreckt, und
- wobei das erste Element (10) mittels des ersten Endes (11) mit dem Fahrzeugdach (102) koppelbar ist,
- ein zweites Element (20), welches als Hybridbauteil ausgeformt ist, und einen Versteifungselement (201) und eine Kunststoffumspritzung (202) umfasst,
- wobei der Versteifungselement (201) mittels der Kunststoffumspritzung (202) mit dem zweiten Ende (12) des ersten Elements (10) gekoppelt ist, und
- wobei das erste Element (10) relativ zum zweiten Element (20) um ein Drehelement (203) schwenkbar angeordnet ist.

2. Anordnung (1) nach Anspruch 1, wobei das Versteifungselement (201) umfasst
- eine Hauptfläche (21),
- eine erste Lasche (23), die aus einem ersten Teilbereich (22) der Hauptfläche (21) geformt ist, wobei
- die erste Lasche (23) ein erstes Teilstück (24) und ein zweites Teilstück (26) aufweist, wobei
- das erste Teilstück (24) senkrecht zu der Hauptfläche (21) ausgerichtet ist, um eine erste Stützwand (25) auszubilden,
- das zweite Teilstück (26) senkrecht zu dem ersten Teilstück (24) ausgerichtet ist und gleichgerichtet zur ersten Hauptfläche (21) ausgerichtet ist, um einen Haltefinger (27) auszubilden, und wobei
- das erste Teilstück (24) mit dem zweiten Teilstück (26) einstückig ausgebildet ist.

3. Anordnung (1) nach Anspruch 2, wobei die Hauptfläche (21) des Versteifungselements (201) umfasst:
- eine zweite Lasche (29), die aus einem zweiten Teilbereich (28) der Hauptfläche (21) geformt ist, wobei
- die zweite Lasche (29) senkrecht auf der Hauptfläche (21) steht, um eine zweite Stützwand (30) auszubilden.

4. Anordnung (1) nach Anspruch 3, wobei die erste Stützwand (25) entlang der Längsachse (101) versetzt zur zweiten Stützwand (30) auf der Hauptfläche (21) angeordnet ist.

5. Anordnung (1) nach einem der Ansprüche 2 bis 4, wobei der Haltefinger (27) und die Kunststoffumspritzung (202) das Drehelement (203) realisieren, wobei sich das Drehelement (203) in die Ausnehmung (13) des ersten Elements (10) erstreckt.

6. Anordnung (1) nach einem der vorhergehenden Ansprüche, wobei das erste Element (10) teilweise an- und/oder umspritzt ist.

7. Anordnung (1) nach einem der vorhergehenden Ansprüche, wobei die Kunsststoffumspritzung (202) die Ausnehmung (13) des ersten Elements (10) vollständig ausfüllt.

8. Anordnung (1) nach einem der vorhergehenden Ansprüche, wobei das Versteifungselement (201)
- ein Metall und/oder
- einen Kunststoff mit einer Steifigkeit, welche höher ist als die Steifigkeit der Kunststoffumspritzung (202) umfasst.

9. Anordnung (1) nach einem der vorhergehenden Ansprüche, wobei das Versteifungselement (201) aus einem Stahlblech ausgeformt ist.

10. Anordnung (1) nach einem der vorhergehenden Ansprüche, wobei das Versteifungselement (201) aus einem Kohlenstofffaserverstärkten Kunststoff ausgeformt ist.

11. Verfahren zum Herstellen einer Anordnung (1) für ein Fahrzeugdach (102), umfassend
- Bereitstellen eines ersten Elements (10) mit einem ersten Ende (11), einem zweiten Ende (12) und einer Ausnehmung (13), das mittels des ersten Endes (13) mit dem Fahrzeugdach (102) koppelbar ist,
- Bereitstellen eines Versteifungselements (201),
- Anordnen des Versteifungselements (201) in die Ausnehmung (13) und/oder Anordnen des Versteifungselements (201) angrenzend an die Ausnehmung (13),
- Bereitstellen einer pumpfähigen Substanz mit vorgegebenen Materialeigenschaften, und
- Aufbringen der bereitgestellten Substanz mittels Spritzguss an einer vorgegebenen Position an dem zweiten Ende (12) des ersten Elements (10) und an dem Versteifungselement (201) und dadurch Ausbilden eines zweiten Elements (20), sodass das zweite Ende (12) des ersten Elements (10) mit dem Versteifungselement (201) gekoppelt ist und das erste Element (10) relativ zum zweiten Element (20) um ein Drehelement (203) schwenkbar ist.

12. Verfahren nach Anspruch 11, wobei das
Bereitstellen des ersten Elements (10) umfasst:
- Stanzen und/oder Prägen eines Metallrohlings und dadurch Ausbilden des ersten Elements (10) mit dem ersten und zweiten Ende (11, 12) und der Ausnehmung (13).

13. Verfahren nach Anspruch 11 oder 12, wobei das Bereitstellen des Versteifungselements (201) umfasst:
- Stanzen und/oder Prägen eines Metallrohlings und/oder Ausformen eines Kunststoffs mit erhöhter Steifigkeit dadurch Ausbilden des Versteifungselements (201) mit einer Hauptfläche (21),
- Formen der Hauptfläche (21) und dadurch Ausbilden des Versteifungselements (201) mit einer ersten Lasche (23) als eine erste Stützwand (25), und
- Formen der Hauptfläche (21) und dadurch Ausbilden des Versteifungselements (201) mit der ersten Lasche (23) als ein Haltefinger (27).

14. Verfahren nach einem der Ansprüche 11 bis 13, wobei das Bereitstellen des Versteifungselements (201) umfasst:
- Formen der Hauptfläche (21) und dadurch Ausbilden des Versteifungselements (201) mit einer zweiten Lasche (25) als eine zweite Stützwand (30).

15. System für ein Kraftfahrzeug (100) mit einem Fahrzeugdach (102), umfassend
- einen Deckel (103), der dazu ausgebildet ist eine Dachöffnung (104) in dem Fahrzeugdach (102) wahlweise freizugeben und zu verschließen, und
- eine Anordnung (1) nach einem der Ansprüche 1 bis 10, wobei der Deckel (103) mit dem ersten Element (10) gekoppelt ist und das zweite Element (20) mit einer Führungsschiene gekoppelt ist, um den Deckel (103) zum Freigeben der Dachöffnung (104) in dem Fahrzeugdach (102) aufzustellen und zum Verschließen der Dachöffnung (104) in dem Fahrzeugdach (102) einzustellen.
